# EUROPÄISCHE PATENTSCHRIFT

(11) **EP 2 733 681 B1**
(45) Veröffentlichungstag und Bekanntmachung des Hinweises auf die Patenterteilung: **24.04.2019**
(21) Anmeldenummer: 13193154.5
(22) Anmeldetag: 15.11.2013
(51) Int. Cl.: G07C 9/00, E05B 39/00, E05B 47/00

(54) **Schließeinheit, Schließvorrichtung und Verfahren zum Entriegeln und/oder Verriegeln eines Schlosses**
Locking unit, locking device, and method for unlocking and/or locking a lock
Unité de fermeture, dispositif de fermeture et procédé de déverrouillage et/ou de verrouillage d'une serrure

(30) Priorität: 16.11.2012 DE 102012221016
(43) Veröffentlichungstag der Anmeldung: 21.05.2014
(73) Patentinhaber: micro-sensys GmbH, 99098 Erfurt (DE)
(72) Erfinder: Jurisch, Reinhard, 99438 Meckfeld bei Bad Berka (DE); Peitsch, Peter, 99099 Erfurt (DE)
(74) Vertreter: Liedtke, Markus

(56) Entgegenhaltungen:
- EP-A1- 0 505 084
- EP-A1- 2 157 552
- EP-A2- 1 024 238
- DE-A1- 19 916 039
- FR-A1- 2 965 434
- US-A1- 2002 024 420
- US-A1- 2012 108 168
- US-B1- 6 720 861

## Beschreibung

Die Erfindung betrifft eine Schließeinheit nach den Merkmalen des Oberbegriffs des Anspruchs 1, eine Schließvorrichtung nach den Merkmalen des Oberbegriffs des Anspruchs 9 und ein Verfahren zum Entriegeln und/oder Verriegeln eines Schlosses nach den Merkmalen des Oberbegriffs des Anspruchs 12.

Aus dem Stand der Technik sind Schließsysteme für Türen allgemein bekannt, welche einen Transponder als Schlüssel für die Steuerung der Zutrittskontrolle verwenden. Das zugehörige Lesegerät befindet sich im Schloss der Tür oder auch in der Wand neben dem Schloss. Der Betrieb des Lesegerätes erfordert eine Energieversorgung, entweder über ein lokales Energieversorgungsnetz oder über Batterien. Das Lesegerät des Schließsystems der jeweiligen Tür muss mit den Transpondern programmiert werden, welche einen Zutritt durch die jeweilige Tür gestatten sollen. Hier existieren verschiedene Lösungen, wobei allgemein zwischen Offline- und Online-Systemen unterschieden wird. Bei Online-Systemen sind die Lesegeräte mit einem installierten Datennetzwerk verbunden, welches mittels eines Steuerrechners jederzeit die Umprogrammierung der Lesegeräte gestattet bzw. der Steuerrechner steuert selbst den Zutritt. Bei Offline-Systemen sind die Lesegeräte nicht mit einem Datennetzwerk verbunden, ein übliches Programmier-Verfahren ist hier die Verwendung einer so genannten Mastercard, welche dann nachfolgende vor das Lesegerät gehaltene Transponder als zutrittsberechtigte Transponder in einen Datenspeicher des Lesegerätes programmiert.

In der US 2010/0073129 A1 und der EP 2 157 552 A1 wird ein elektromechanisches Schloss beschrieben, welches mittels eines Challenge-Response-Verfahrens mit einem Kommunikationsgerät kommunizieren kann und die Energie für diese Kommunikation mit dem Kommunikationsgerät vom Kommunikationsgerät bezieht.

Aus der WO 2011/065892 A1 sind ein Zugangskontrollverfahren und eine zugehörige Schlosseinheit bekannt. Das Zugangskontrollverfahren ermöglicht einen Zugang zu einer geschützten Umgebung mittels eines Challenge-Response-Verfahrens über eine drahtlose Kurzstreckenkommunikation der Schlosseinheit mit einer Schlüsseleinheit.

In der DE 199 16 039 A1 wird ein Gehäuse zur Aufnahme mindestens eines elektrisch betätigbaren Schlosses mitsamt der zugehörigen Steuerelektrik und/oder Steuerelektronik beschrieben. Das Gehäuse umfasst einen Gehäusekasten, welcher einen Gehäuseboden und Gehäusewände aufweist und mit einem Gehäusedeckel verschließbar ist. In mindestens einer Gehäusewand ist eine Öffnung zum Einsetzen des mindestens einen Schlosses ausgebildet und der Gehäusedeckel ist über das mindestens eine in den Gehäusekasten eingesetzte Schloss verriegelbar.

Aus der DE 10 2009 019 657 A1 sind eine Vorrichtung und ein Verfahren zur Energieversorgung eines RFID-Bauteils bekannt. Die Vorrichtung umfasst eine Antenne und einen Energiespeicher. Der Energiespeicher speichert Energie, die durch ein elektromagnetisches Wechselfeld während eines ersten Zeitintervalls in die Antenne induziert wird. Des Weiteren versorgt der Energiespeicher das RFID-Bauteil zur Aufrechterhaltung von dessen Funktionalität während eines späteren, zweiten Zeitintervalls mit Energie, wenn eine durch ein elektromagnetisches Wechselfeld während des späteren, zweiten Zeitintervalls induzierte Energie nicht ausreicht, um das RFID-Bauteil zu versorgen.

In der KR 1020100113872 A wird ein RFID-Türschlosssystem beschrieben.

Aus der WO 2012/041885 A1 wird ein Verfahren zum Öffnen und Schließen eines Fahrzeugs und/oder zum Starten des Motors des Fahrzeugs durch Übertragung einer Authentifikation mittels eines Mobiltelefons bekannt.

In der US 2002/024420 A1 wird ein Schlüssel zum selektiven Ermöglichen des Zugangs zu einem Raum beschrieben, welcher ein nicht angetriebenes Schloss und eine Schlosssteuerung aufweist. Der Schlüssel umfasst ein Gehäuse. Darin angeordnet sind ein Prozessor zum Bilden variabler Signale zur Übertragung vom Schlüssel zur Schlosssteuerung und zum Auswerten empfangener variabler Signale, eine mit dem Prozessor kommunizierende Speichereinheit zum Speichern der ausgetauschten Signale, ein mit dem Prozessor kommunizierender Sender zur drahtlosen Übertragung der Signale vom Schlüssel zur Schlosssteuerung, zur induktiven Übertragung eines Zugriffsanforderungssignals an die Schlosssteuerung und zur Übertragung eines Antwortsignals auf ein erhaltenes Abfragesignal, einen mit dem Prozessor kommunizierenden Empfänger zum Empfang des Abfragesignals und eine mit dem Prozessor kommunizierende Energieübertragungseinheit zum drahtlosen Übertragen von Energie an die Schlosssteuerung zeitgleich zur Datenübertragung.

Aus der US 2012/108168 A1 ist ein externes Stromversorgungssystem für einen Riegel bekannt, umfassend kontaktlose Kommunikationsmittel des NFC-Typs. Das System enthält ein Schloss, das mit elektronischen Schaltungen zum Senden und Empfangen über NFC und elektrischen Schaltuungen zur Steuerung von mechanischen Verriegelungs-/Entriegelungsorganen versehen ist, und ein Mobiltelefon, das mit Schaltungen versehen ist, die es ihm ermöglichen, im NFC-Modus zu arbeiten. Das System enthält des Weiteren Einrichtungen, um durch Fernversorgung Energie vom Telefon an das Schloss zu übertragen, um einen Pufferkondensator zu laden, um anschließend vorübergehend die elektrischen und elektronischen Schaltungen des Schlosses für die Zeit zu versorgen, in der dieses die NFC-Schaltungen des Telefon abfragt, um die Berechtigung des Trägers des Telefons zu überprüfen und die Öffnung einer Tür zu steuern.

Der Erfindung liegt die Aufgabe zu Grunde, eine verbesserte Schließeinheit, eine verbesserte Schließvorrichtung und ein verbessertes Verfahren zum Entriegeln und/oder Verriegeln eines Schlosses anzugeben.

Die Aufgabe wird erfindungsgemäß gelöst durch eine Schließeinheit mit den Merkmalen des Anspruchs 1, eine Schließvorrichtung mit den Merkmalen des Anspruchs 9 und ein Verfahren zum Entriegeln und/oder Verriegeln eines Schlosses mit den Merkmalen des Anspruchs 12.

Vorteilhafte Ausgestaltungen der Erfindung sind Gegenstand der Unteransprüche.

Eine Schließeinheit für ein Schloss umfasst einen Aktor zum Bewegen oder zum Blockieren und Freigeben einer Verriegelungs- und Entriegelungseinheit des Schlosses, eine elektrische Energieversorgungsanordnung, einen elektrischen Schalter zwischen der elektrischen Energieversorgungsanordnung und dem Aktor, eine Verschlüsselungs-/Entschlüsselungseinheit, einen Schlüsselspeicher sowie eine passive RFID-Grundschaltung mit einer Antenne. Erfindungsgemäß sind zumindest der Aktor, der elektrische Schalter zwischen der elektrischen Energieversorgungsanordnung und dem Aktor, die Verschlüsselungs-/Entschlüsselungseinheit und der Schlüsselspeicher in einem nicht zerstörungsfrei zu öffnenden Gehäuse angeordnet.

Bei der erfindungsgemäßen Schließeinheit handelt es sich um einen Krypto-Aktuator, auch als integraler RFID-Krypto-Aktuator bezeichnet.

Der Begriff RFID steht dabei für "radio-frequency identification" und bezeichnet ein auf elektromagnetischen Wellen basierendes drahtloses Datenübertragungsverfahren, d. h. ein funkbasiertes Datenübertragungsverfahren, für welches ein RFID-Transponder und ein RFID-Lesegerät, auch als RFID-Reader bezeichnet, erforderlich ist. Der RFID-Transponder wird dabei durch an ihn vom RFID-Lesegerät übermittelte Funksignale angesprochen. Er antwortet üblicherweise durch Übertragung eines eindeutigen Identifikationscodes und gegebenenfalls weiterer Informationen. Die passive RFID-Grundschaltung ist der eigentliche passive RFID-Transponder oder zumindest ein Teil des passiven RFID-Transponders.

Die Schließeinheit kann auch auf Basis von NFC (Near Field Communication) arbeiten, wobei NFC eine spezielle Anwendung von RFID ist. RFID arbeitet auf verschiedenen Frequenzen. NFC ist auf eine dieser Frequenzen festgelegt, es arbeitet bei einer Trägerfrequenz von 13,56 MHz.

Durch die erfindungsgemäße Lösung wird das aus dem Stand der Technik bekannte System, bei welchem ein Lesegerät im Schloss angeordnet ist und ein Transponder als Schlüssel verwendet wird, umgekehrt. D. h. die Schließeinheit ist der RFID-Transponder oder umfasst zumindest den RFID-Transponder. Dadurch ist im Vergleich zu aus dem Stand der Technik bekannten, auf Transponder-technik beruhenden Schließsystemen eine Zuverlässigkeit wesentlich verbessert und eine wesentliche Kostenreduzierung erreicht, wobei eine Sicherheit einer Steuerung einer jeweiligen Zugangskontrolle durch die erfindungsgemäße Lösung auf gleichem Niveau wie bei den aus dem Stand der Technik bekannten Schließsystemen ist oder gegenüber diesen aus dem Stand der Technik bekannten Schließsystemen verbessert ist. Dies ist dadurch erreicht, dass alle wesentlichen Komponenten der Schließeinheit im nicht zerstörungsfrei zu öffnenden Gehäuse der Schließeinheit angeordnet sind, d. h. die Komponenten sind in dem Gehäuse eingekapselt, welches nur durch dessen Zerstörung zu öffnen ist. Eine Manipulation der Schließeinheit ohne eine Zerstörung des Gehäuses ist daher nicht möglich. Daher sind unbemerkte Manipulationen und ein daraus resultierendes unbefugtes Öffnen des jeweiligen Schlosses ausgeschlossen. Selbst eine Zerstörung des Gehäuses, um ein gewaltsames Öffnen des jeweiligen Schlosses durch einen Unbefugten zu erzwingen, ist bei einer entsprechenden Ausbildung des Gehäuses nicht oder zumindest nur mit erheblichem Aufwand möglich und würde beispielsweise zur vollständigen Zerstörung und daher zur Funktionslosigkeit der Schließeinheit führen. Die Schließeinheit weist im Vergleich zum Stand der Technik einen wesentlich geringeren Herstellungsaufwand, Installationsaufwand, Wartungsaufwand und Energiebedarf auf.

Die erfindungsgemäße Schließeinheit ist beispielsweise in und/oder an einem Schloss einer Tür, eines Tresors, eines Koffers oder in und/oder an einer Vielzahl anderer Schlösser einsetzbar. Beispielsweise kann die Schließeinheit in Form eines Standardschlosses, beispielsweise in Form eines Zylinderschlosses, ausgebildet sein, so dass ein derartiges Standardschloss beispielsweise in einer Tür durch die Schließeinheit zu ersetzen ist.

Der Aktor der Schließeinheit kann beispielsweise über eine Schließ- oder Sperrvorrichtung der Schließeinheit, welche aus dem Gehäuse der Schließeinheit herausgeführt ist, entweder mit der Verriegelungs- und Entriegelungseinheit des Schlosses derart gekoppelt sein, dass eine Bewegung des Aktors über die mechanische Schließ- oder Sperrvorrichtung auf die Verriegelungs- und Entriegelungseinheit des Schlosses übertragbar ist, so dass die Verriegelungs- und Entriegelungseinheit des Schlosses durch den Aktor zu bewegen ist, d. h. das Schloss durch den Aktor aktiv zu schließen und zu öffnen ist, oder durch eine mittels des Aktors bewirkte Bewegung der mechanischen Schließ- oder Sperrvorrichtung ist die Verriegelungs- und Entriegelungseinheit des Schlosses, d. h. der Riegel des Schlosses, zu sperren und zu entsperren, d. h. zu blockieren und freizugeben, so dass beispielsweise eine manuelle Bewegung der Verriegelungs- und Entriegelungseinheit des Schlosses blockiert oder freigegeben ist.

Die elektronischen Schaltungsteile der Schließeinheit sind vorteilhafterweise in mehreren Halbleiterchips oder besonders vorteilhaft in einem Halbleiterchip integriert. Bei dem Halbleiterchip handelt es sich vorteilhafterweise um einen so genannten ASIC (application-specific integrated circuit), d. h. um eine anwendungsspezifische integrierte Schaltung, auch als Custom Chip bezeichnet. Dies ist eine kostengünstige Lösung und weist zudem eine hohe Sicherheit auf, da die Funktion des ASIC nicht manipulierbar ist.

Durch die Ausbildung der RFID-Grundschaltung als eine passive RFID-Grundschaltung ist die Schließeinheit als ein passiver RFID-Transponder ausgebildet oder umfasst einen passiven RFID-Transponder. Ein derartiger passiver RFID-Transponder weist keine eigene Energieversorgung auf, d. h. keine Batterie, sondern es ist mittels vom RFID-Lesegerät ausgesendeter elektromagnetischer Wellen elektrische Energie durch Induktion auf den RFID-Transponder zu übertragen. Es handelt sich daher bei der erfindungsgemäßen Schließeinheit um einen passiven Krypto-Aktuator, auch als passiver integraler RFID-Krypto-Aktuator bezeichnet. Diese passive Ausbildung der Schließeinheit ist besonders vorteilhaft, da die Schließeinheit auf diese Weise keine eigene elektrische Energiequelle, beispielsweise in Form einer Batterie, aufweist und auch nicht an eine Energiequelle, beispielsweise an ein lokales Energieversorgungsnetz, angeschlossen ist. Ein wesentlicher Vorteil dieser Ausführung der Schließeinheit ohne interne Energiequelle und ohne eine kabelgebundene Kopplung an ein externes Energieversorgungsnetz ist die sehr hohe Zuverlässigkeit, welche vergleichbar zu der eines mechanischen Schlosses ist. Ein Ausfall aufgrund einer leeren Batterie kann nicht auftreten und erfordert deshalb hierfür auch keine Vorkehrungen, welche das Sicherheitsniveau reduzieren würden. Aufgrund der passiven Bauart ist die Schaltung fast nie unter Spannung und im Betrieb, es gibt also kaum Alterungsprozesse, welche zu Ausfällen führen könnten. Ein Ausfall der Schließeinheit ist damit nicht wahrscheinlicher als ein Ausfall eines mechanischen Schlosses, zum Beispiel durch Abbrechen des Schlüssels.

Die passive RFID-Grundschaltung wird auch als RFID-Front-End bezeichnet und umfasst nur die Bauteile des passiven RFID-Transponders, die zum Datenaustausch und zum Energieaustausch erforderlich sind. Die elektrische Energieversorgungsanordnung der Schließeinheit besteht dabei zweckmäßigerweise lediglich aus der Energieversorgung, welche aus der passiven RFID-Grundschaltung herausgeführt und zum elektrischen Schalter geführt ist, so dass die gesamte Schließeinheit über das Lesegerät auf die beschriebene Weise mit Energie versorgt wird. D. h. die elektrische Energieversorgungsanordnung ist zweckmäßigerweise lediglich durch zumindest eine elektrische Verbindung zwischen der passiven RFID-Grundschaltung und dem elektrischen Schalter gebildet.

Die mittels vom RFID-Lesegerät ausgesendeter elektromagnetischer Wellen durch Induktion auf den RFID-Transponder übertragene elektrische Energie kann in einem elektrischen Energiekurzzeitzwischenspeicher gespeichert werden, insbesondere kurzzeitig zwischengespeichert werden. Besonders bevorzugt wird die mittels vom RFID-Lesegerät ausgesendeter elektromagnetischer Wellen durch Induktion auf den RFID-Transponder übertragene elektrische Energie in einem Kondensator des RFID-Transponders kapazitiv gespeichert, insbesondere kurzzeitig kapazitiv zwischengespeichert. Zu diesem Zweck umfasst die Energieversorgungsanordnung der Schließeinheit dann in diesem Fall erfindungsgemäß nicht lediglich zumindest eine elektrische Verbindung zwischen der passiven RFID-Grundschaltung und dem elektrischen Schalter, sondern zumindest einen als ein Kondensator ausgebildeten elektrischen Energiekurzzeitzwischenspeicher, welcher über entsprechende elektrische Verbindungen mit der passiven RFID-Grundschaltung und dem elektrischen Schalter verbunden ist. In diesem Kondensator ist die mittels vom RFID-Lesegerät ausgesendeter elektromagnetischer Wellen durch Induktion auf den RFID-Transponder übertragene elektrische Energie kapazitiv speicherbar, insbesondere kurzzeitig kapazitiv zwischenpeicherbar. Alternativ oder zusätzlich kann die Energieversorgungsanordnung der Schließeinheit beispielsweise auch zumindest einen als ein Akkumulator ausgebildeten elektrischen Energiekurzzeitzwischenspeicher zur Energiespeicherung, insbesondere zur kurzzeitigen Energiezwischenspeicherung, der mittels vom RFID-Lesegerät ausgesendeter elektromagnetischer Wellen durch Induktion auf den RFID-Transponder übertragenen elektrischen Energie umfassen.

Ein Laden des elektrischen Energiekurzzeitzwischenspeichers erfolgt zweckmäßigerweise ausschließlich durch das RFID-Lesegerät über die passive RFID-Grundschaltung während eines jeweiligen Betätigens der Schließeinheit mittels des RFID-Lesegerätes, also während eines jeweiligen Schließvorgangs.

Ein derartiger Ladevorgang dauert vorzugsweise weniger als zwei Sekunden. Der elektrische Energiekurzzeitzwischenspeicher dient nur der Zwischenspeicherung für eine etwas größere Energiemenge als sie üblicherweise bei chipintegrierten Kondensatoren in RFID-Grundschaltungen zur Verfügung stehen. Diese weisen üblicherweise eine Kapazität von 1 nF auf. Ein als Kondensator ausgebildeter elektrischer Energiekurzzeitzwischenspeicher weist zu diesem Zweck, d. h. für die erwähnte Zwischenspeicherung für die etwas größere Energiemenge, beispielsweise eine Kapazität von größer als 100 nF auf. Die passive Energieversorgung der Schließeinheit, welche gegebenenfalls zumindest einen elektrischen Energiekurzzeitzwischenspeicher umfasst, ist somit neben der Montage der Schließeinheit direkt im und/oder am jeweiligen Schloss und insbesondere neben dem zerstörungsfrei nicht zu öffnenden Gehäuse der Schließeinheit, in welchem insbesondere der Schlüsselspeicher, die Verschlüsselungs-/Entschlüsselungseinheit, der Aktor und der Schalter zur Betätigung des Aktors manipulationssicher angeordnet sind, ein wesentliches Merkmal der Schließeinheit.

Um sicherzugehen, dass der elektrische Energiekurzzeitzwischenspeicher ausreichend geladen ist, so dass eine ausreichende Energiemenge zur Betätigung des Aktors zur Verfügung steht, ist beispielsweise eine Ladezeit zum Aufladen des elektrischen Energiekurzzeitzwischenspeichers vorgegeben, so dass die Aktivierung des Schalters, um dadurch den Aktor mit der im elektrischen Energiekurzzeitzwischenspeicher zwischengespeicherten elektrischen Energie zu betätigen, erst nach Ablauf dieser vorgegebenen Ladezeit erfolgt. Da jedoch die Energieübertragung vom Lesegerät auf die passive RFID-Grundschaltung der Schließeinheit und damit die Aufladung des elektrischen Energiekurzzeitzwischenspeichers abhängig ist vom Abstand des Lesegerätes von der Schließeinheit, ist eine entsprechend lange Ladezeit vorzugeben, um sicherzustellen, dass der elektrische Energiekurzzeitzwischenspeicher unter allen Bedingungen ausreichend geladen ist, bevor eine Aktivierung des Schalters der Schließeinheit stattfindet.

Um den Schalter der Schließeinheit so schnell wie möglich zu betätigen, so dass der Aktor so schnell wie möglich die Verriegelungs- und Entriegelungseinheit des Schlosses bewegt oder blockiert bzw. freigibt, weist die Schließeinheit in einer besonders vorteilhaften Ausführungsform eine Ladestandsüberwachung des elektrischen Energiekurzzeitzwischenspeichers auf. Auf diese Weise ist der Schalter und damit der Aktor sofort zu aktivieren, wenn der elektrische Energiekurzzeitzwischenspeicher einen vorgegebenen Mindestladestand erreicht hat, welcher ausreicht, um mit der im elektrischen Energiekurzzeitzwischenspeicher gespeicherten Energie den Aktor zu betätigen. Auf diese Weise ist eine Zeitspanne zwischen dem Verbindungsaufbau zwischen dem Lesegerät und der Schließeinheit und dem Bewegen oder Blockieren bzw. Freigeben der Verriegelungs- und Entriegelungseinheit des Schlosses mittels des Aktors unter allen Bedingungen auf ein Minimum verkürzt.

In einer vorteilhaften Ausführungsform ist der mittels der Ladestandsüberwachung ermittelte Ladestand des elektrischen Energiekurzzeitzwischenspeichers beispielsweise auch von der Schließeinheit dem Lesegerät zu übermitteln. Auf diese Weise erhält der Benutzer eine Information, dass das Laden des Energiespeichers funktioniert und der Aktor das Schloss bewegt oder blockiert bzw. freigibt. Des Weiteren könnte durch das Übermitteln des aktuellen Ladestandes des elektrischen Energiekurzzeitzwischenspeichers an das Lesegerät der Schalter der Schließeinheit zum Betätigen des Aktors, alternativ zum automatischen Aktivieren bei Erreichen des vorgegebenen Ladestandes, beispielsweise auch durch den Benutzer über das Lesegerät aktiviert werden.

Die Schließeinheit funktioniert als ein passiver Transponder mit darin integriertem Aktor. Die Energieversorgung erfolgt erfindungsgemäß ausschließlich von außen, über das RFID-Lesegerät, welches beispielsweise als ein mobiles Kommunikationsgerät ausgebildet ist, zum Beispiel als ein Mobiltelefon. Nur das RFID-Lesegerät dient als Energiequelle für die Schließeinheit. Die von dieser Energiequelle, d. h. vom RFID-Lesegerät, auf die Schließeinheit übertragene Energie kann, wenn ein elektrischer Energiekurzzeitzwischenspeicher in der Schließeinheit vorhanden ist, kurzzeitig zwischengespeichert werden, zur Nutzung für unmittelbar nachfolgende Vorgänge der Schließeinheit. Die Schließeinheit ist in der übrigen Zeit energielos, mit daraus resultierenden Vorteilen gegenüber batterieversorgten oder von einem lokalen Energieversorgungsnetz versorgten Schließsystemen, beispielsweise eine sehr hohe Zuverlässigkeit, welche vergleichbar zu der eines mechanischen Schlosses ist. Ein Ausfall aufgrund einer leeren Batterie kann nicht auftreten und erfordert deshalb hierfür auch keine Vorkehrungen, welche das Sicherheitsniveau reduzieren würden. Aufgrund der passiven Bauart ist die Schaltung fast nie unter Spannung und im Betrieb, es gibt also kaum Alterungsprozesse, welche zu Ausfällen führen könnten. Ein Ausfall der Schließeinheit ist damit nicht wahrscheinlicher als ein Ausfall eines mechanischen Schlosses, zum Beispiel durch Abbrechen des Schlüssels.

Der Aktor, welcher auch als Aktuator bezeichnet wird, ist vorzugsweise als ein Elektromotor, als ein Elektromagnet oder als ein Piezoelement, d. h. als ein Piezoaktor, ausgebildet. Mit derartigen Aktoren ist eine kleine Bauweise und ein Energie sparender Betrieb möglich, so dass die vom RFID-Lesegerät übertragene elektrische Energie zu deren Betrieb ausreicht. Gegebenenfalls ist die vom RFID-Lesegerät übertragene Energie zunächst auf die beschriebene Weise im elektrischen Energiekurzzeitzwischenspeicher kurzzeitig zwischenzuspeichern, um eine ausreichende Energieversorgung für den Aktor sicherzustellen. Je nach Ausbildung der Schließeinheit und je nachdem, ob die Verriegelungs- und Entriegelungseinheit des Schlosses durch die Aktorik aktiv bewegt oder lediglich blockiert und freigegeben werden soll, ist die jeweils geeignete Ausführungsform der Aktorik einzusetzen.

In einer vorteilhaften Ausführungsform umfasst die Schließeinheit einen Sensor zur Überwachung der Bewegung oder der Blockade und Freigabe der Verriegelungs- und Entriegelungseinheit des Schlosses. Dadurch ist die Funktionssicherheit der Schließeinheit weiter verbessert. Mittels des Sensors sind Informationen über einen aktuellen Schließzustand über die kontaktlose Schnittstelle zum RFID-Lesegerät zu übermitteln. Auf diese Weise ist erfassbar, ob der Aktor wirklich betätigt wurde und das Schloss freigegeben wurde. Der Sensor kann beispielsweise als ein Reedsensor ausgebildet sein, d. h. als ein Reedkontakt, welcher nur bei korrekter Bewegung des Aktors bzw. der Verriegelungs- und Entriegelungseinheit des Schlosses aktiviert wird und ein Schaltsignal an die Schaltung der Schließeinheit weitergibt. Anschließend ist dann dieses Signal über die kontaktlose Schnittstelle zum Lesegerät zu übertragen und kann dann einem jeweiligen Benutzer angezeigt werden. Ist eine Energieversorgung für den Sensor erforderlich, so kann diese ebenfalls über das Lesegerät und die passive RFID-Grundschaltung erfolgen, analog der oben bereits beschriebenen Energieversorgung der anderen Komponenten der Schließeinheit entweder direkt, d. h. ohne Energiezwischenspeicherung, oder gegebenenfalls ebenfalls aus dem elektrischen Energiekurzzeitzwischenspeicher, wenn dieser vorhanden ist.

Vorteilhafterweise umfasst die Schließeinheit eine optische, akustische und/oder haptische Ausgabeeinheit zur Ausgabe eines Sensorergebnisses des Sensors. Auf diese Weise ist dieses Signal des Sensors, alternativ oder zusätzlich zur Übertragung auf das RFID-Lesegerät, mittels der Ausgabeeinheit direkt an der Schließeinheit auszugeben und dem Benutzer die Information auf diese Weise zu übermitteln. Eine derartige optische Anzeigeeinheit kann beispielsweise als eine Licht emittierende Diode (LED) ausgebildet sein. Eine Energieversorgung der optischen, akustischen und/oder haptischen Ausgabeeinheit kann ebenfalls über das Lesegerät und die passive RFID-Grundschaltung erfolgen, analog der oben bereits beschriebenen Energieversorgung der anderen Komponenten der Schließeinheit entweder direkt, d. h. ohne Energiezwischenspeicherung, oder gegebenenfalls ebenfalls aus dem elektrischen Energiekurzzeitzwischenspeicher, wenn dieser vorhanden ist.

Zweckmäßigerweise ist das Gehäuse aus Metall und/oder aus Kunststoff ausgebildet. Ein Gehäuse aus Metall ist besonders stabil auszubilden, so dass eine Zerstörung des Gehäuses, um auf diese Weise eine Öffnung des Schlosses zu erzwingen, unmöglich oder zumindest erheblich erschwert ist. Auch ein Gehäuse aus Kunststoff kann eine ausreichende Stabilität aufweisen. Insbesondere ist jedoch auch ein Gehäuse aus Kunststoff derart auszubilden, dass es zerstörungsfrei nicht zu öffnen ist, so dass eine Manipulation oder eine beabsichtigte Manipulation sofort ersichtlich ist. Des Weiteren hat ein Gehäuse aus Kunststoff den Vorteil, dass auch die Antenne der Schließeinheit im Gehäuse anordbar ist, wobei keine signifikante Reduzierung des Empfangs der Antenne durch das Gehäuse auftritt. Auch bei einem aus Metall ausgebildeten Gehäuse kann auch die Antenne im Gehäuse angeordnet sein, jedoch ist durch das Metallgehäuse der Empfang der Antenne stark beeinträchtigt.

Auch eine Kombination aus Metall und Kunststoff zur Ausbildung des Gehäuses ist möglich, beispielsweise ein mit Kunststoff, beispielsweise Epoxidharz, ausgegossenes Metallgehäuse. Dies hat den besonderen Vorteil, dass alle im Gehäuse eingeschlossenen Bauteile der Schließeinheit durch den Einguss in Kunststoff stoffschlüssig miteinander verbunden sind, so dass selbst bei einer Öffnung des Gehäuses durch dessen Zerstörung eine gezielte Manipulation einzelner Teile der Schließeinheit verhindert ist. Dies würde zu einer Zerstörung der Schaltung der Schließeinheit und dadurch zu deren vollständiger Funktionslosigkeit führen. Auch bei einem Gehäuse, welches lediglich aus Kunststoff ausgebildet ist, können die im Gehäuse angeordneten Komponenten der Schließeinheit auf diese Weise in das Gehäuse eingeschlossen sein. Beispielsweise ist das Gehäuse als Spritzgussteil auszubilden, wobei die im Gehäuse einzuschließenden Komponenten der Schließeinheit mit dem Kunststoff zur Ausbildung des Gehäuses zu umspritzen sind. Auf diese Weise sind diese Komponenten mit dem Gehäuse stoffschlüssig verbunden und das Gehäuse ist als eine einteilige Kapsel ausgebildet, welche nur durch ihre Zerstörung zu öffnen ist.

Eine erfindungsgemäße Schließvorrichtung umfasst zumindest eine derartige Schließeinheit und zumindest ein Lesegerät, insbesondere ein RFID-Lesegerät, auch als RFID-Reader bezeichnet. Auf diese Weise ist das Schloss, in und/oder an welchem die Schließeinheit angeordnet ist, mit dem Lesegerät durch Übermittlung eines jeweiligen korrekten Schlüssels an die Schließeinheit zu öffnen. Die Übertragung des Schlüssels erfolgt dabei über eine drahtlose Kommunikationsverbindung, d. h. über eine drahtlose und kontaktlose Kommunikationsschnittstelle, eine RFID-Funkkommunikationsschnittstelle zwischen dem RFID-Lesegerät und der Schließeinheit, welche als RFID-Transponder ausgebildet ist oder einen solchen umfasst. Mit der erfindungsgemäßen Schließvorrichtung, umfassend die Schließeinheit, sind die bereits zur Schließeinheit geschilderten Vorteile zu erreichen.

Insbesondere ist die Schließeinheit allein durch das Lesegerät auf die bereits beschriebene Weise mit elektrischer Energie zu versorgen, so dass für die Schließeinheit keine Energieversorgung durch einen Anschluss an ein lokales Energieversorgungsnetz erforderlich ist. Des Weiteren weist die Schließeinheit auch keine eigene Energiequelle, beispielsweise in Form einer Batterie oder in Form eines extern aufzuladenden Akkumulators auf, welche nach einer bestimmten Betriebszeit, d. h. nach einer Mehrzahl von Schließvorgängen, erschöpft ist und ausgetauscht oder entnommen und aufgeladen werden muss. Allenfalls für eine kurzzeitige Energiezwischenspeicherung kann die Schließeinheit einen elektrischen Energiekurzzeitzwischenspeicher aufweisen, welcher jeweils direkt mittels der vom Lesegerät auf die Schließeinheit übertragenen elektrischen Energie aufzuladen ist. Diese Energie dient dann jeweils lediglich einem unmittelbar folgenden Betätigen des Aktors und eventuell damit verbundener Vorgänge, zum Beispiel dem Betreiben des Sensors zur Überwachung der Bewegung oder der Blockade und Freigabe der Verriegelungs- und Entriegelungseinheit des Schlosses und dem Ausgeben und/oder Übermitteln des Sensorergebnisses an das Lesegerät.

In einer vorteilhaften Ausführungsform ist das Lesegerät als ein mobiles Kommunikationsgerät ausgebildet oder in ein mobiles Kommunikationsgerät integriert. Das mobile Kommunikationsgerät ist beispielsweise als ein Mobiltelefon ausgebildet, insbesondere als ein so genanntes Smartphone. Des Weiteren kann das mobile Kommunikationsgerät beispielsweise auch als ein tragbarer Computer ausgebildet sein, zum Beispiel als ein sogenannter Handheld-Computer oder PDA. Insbesondere bei derartigen mobilen Kommunikationsgeräten ist eine NFC-Schnittstelle (Near Field Communication) bereits weit verbreitet, so dass diese mobilen Kommunikationsgeräte sich gut als Lesegerät für die Schließvorrichtung eignen. Auf diese Weise sind kostenintensive spezielle Lesegeräte nicht erforderlich, sondern es ist ein bei einem jeweiligen Benutzer bereits vorhandenes Kommunikationsgerät nutzbar, beispielsweise dessen Mobiltelefon. Das RFID-Lesegerät und die Schließeinheit arbeiten dann als NFC-Lesegerät und NFC-Transponder, d. h. bei der Frequenz von 13,56 MHz.

In einer Ausführungsform der Schließvorrichtung umfasst die Schließvorrichtung neben der Schließeinheit und dem Lesegerät, welches insbesondere als ein RFID-Lesegerät ausgebildet ist, einen separaten Transponder mit einem Schlüssel zur Authentifizierung des Lesegeräts gegenüber der Schließeinheit. In den anderen, oben beschriebenen Ausführungsformen sind der Schlüssel und die Verschlüsselungseinheit, welche zur Schließeinheit bzw. zu deren Schlüssel und Verschlüsselungs-/Entschlüsselungseinheit passen bzw. identisch sind, im Lesegerät gespeichert bzw. vorhanden. In dieser Ausführungsform weist das Lesegerät, welches beispielsweise als ein mobiles Kommunikationsgerät ausgebildet ist, selbst keinen Schlüssel zur Authentifizierung gegenüber der Schließeinheit auf, sondern dient lediglich der Übertragung des Schlüssels aus dem separaten Transponder auf die Schließeinheit. Der Schlüssel ist im separaten Transponder gespeichert. Dieser weist eventuell auch die Verschlüsselungseinheit auf. Zudem stellt das Lesegerät durch die oben beschriebene Energieübertragung auf die Schließeinheit die elektrische Energieversorgung für die Schließeinheit zur Verfügung.

Der im separaten Transponder gespeicherte Schlüssel wird durch das Lesegerät, beispielsweise durch das als Mobiltelefon oder PDA ausgebildete mobile Kommunikationsgerät, auf die Schließeinheit übertragen. In diesem Fall kommuniziert das Lesegerät sowohl mit der Schließeinheit als auch mit dem separaten Transponder. Auf diese Weise ist im Lesegerät selbst keine Verschlüsselungsfunktion erforderlich, diese bleibt auf den separaten Transponder beschränkt.

Dies ist beispielsweise von Vorteil, wenn die Schließeinheit von einer Vielzahl von Benutzern nur lediglich kurzzeitig zu nutzen ist. Beispielsweise ist die Schließeinheit in ein Schloss einer Tür eines Hotelzimmers integriert. Vom Hotel ist dann lediglich der zur Schließeinheit passende separate Transponder an den jeweiligen Benutzer, beispielsweise an den jeweiligen Hotelgast, auszugeben. Als Lesegerät, insbesondere RFID-Lesegerät, ist dann beispielsweise das private Mobiltelefon des jeweiligen Hotelgastes zu nutzen. Dieses ist durch die Nutzung des separaten Transponders nicht umzuprogrammieren.

Der separate Transponder ist zweckmäßigerweise als ein RFID-Transponder ausgebildet. Zur Übertragung des Schlüssels vom separaten Transponder auf das Lesegerät und von diesem auf die Schließeinheit müssen sich beispielsweise der separate Transponder und die Schließeinheit zur gleichen Zeit im RFID-Feld des Lesegerätes befinden. Die Leseeinheit dient als Übertragungsvorrichtung der Schlüsseldaten vom separaten Transponder auf die Schließeinheit unter Nutzung einer Antikollisionsfunktion über die RFID-Schnittstelle. Alternativ kann der Schlüssel über Funk, d. h. über ein von RFID abweichendes kontaktloses Datenübertragungsverfahren, beispielsweise Bluetooth, auf das Lesegerät übertragen werden und von diesem dann zweckmäßigerweise über die RFID-Schnittstelle auf die Schließeinheit übertragen werden.

In einem erfindungsgemäßen Verfahren zum Entriegeln und/oder Verriegeln eines Schlosses mittels einer derartigen Schließvorrichtung wird eine bidirektionale Kommunikationsverbindung zwischen dem Lesegerät und der Schließeinheit aufgebaut, wobei sich das Lesegerät gegenüber der Schließeinheit authentifiziert und wobei nach erfolgreicher Authentifizierung der elektrische Schalter der Schließeinheit betätigt wird, um mittels des Aktors die Verriegelungs- und Entriegelungseinheit des Schlosses zu bewegen oder zu blockieren bzw. freizugeben. Das Verfahren ermöglicht eine sichere Schließ- und Öffnungsfunktion des jeweiligen Schlosses, mit den Vorteilen, welche bereits zur Schließvorrichtung und zur Schließeinheit geschildert wurden, welche zur Durchführung des Verfahrens erforderlich sind.

Für eine Öffnung des Schlosses muss das Lesegerät in den Funktionsbereich der Antenne der Schließeinheit gebracht und aktiviert werden. Beispielsweise muss das mobile Kommunikationsgerät in den Funktionsbereich der Antenne der Schließeinheit gebracht und dessen Transponder-Lesegerät, d. h. RFID-Lesegerät, aktiviert werden, zum Beispiel nach Betätigung einer Tasterfunktion oder durch ein ständiges so genanntes Polling. Anschließend wird eine bidirektionale Kommunikation zwischen dem Lesegerät und der Schließeinheit, d. h. dem Passiv-Krypto-Aktuator, aufgebaut. Diese Kommunikation beginnt zweckmäßigerweise mit einer Authentifizierung des Lesegerätes, d. h. das Lesegerät muss nachweisen, dass ein Zugriff auf den Datenspeicher und/oder den elektrischen Schalter des Passiv-Krypto-Aktuators zugelassen wird. Hierfür werden die üblicherweise in der Transpondertechnik eingesetzten Verfahren angewendet, z. B. Password oder Challenge-Response-Verfahren. Optional kann auch eine Authentifizierung der Schließeinheit zum Lesegerät, also eine gegenseitige Authentifizierung beider Partner, implementiert sein. Nach erfolgreicher Authentifizierung kann nachfolgend durch eine weitere Kommunikation, welche zur Erhöhung der Sicherheit möglichst auch noch einmal kryptografisch verschlüsselt ist, der elektrische Schalter aktiviert werden, damit der Aktor die Verriegelungs- und Entriegelungseinheit des Schlosses bewegt oder zumindest freigibt. Nach dieser Freigabe der Verriegelungs- und Entriegelungseinheit des Schlosses kann beispielsweise bei einem Türschloss die Tür zum Beispiel durch Betätigen eines Türknaufs geöffnet werden, beispielsweise durch Drehen des Türknaufs. Ein Verschließen des Schlosses, beispielsweise durch eine Blockade der Verriegelungs- und Entriegelungseinheit des Schlosses, erfolgt auf die gleiche Weise.

In einer vorteilhaften Ausführungsform des Verfahrens authentifiziert sich das Lesegerät gegenüber der Schließeinheit mittels eines Schlüssels, welcher von einem separaten Transponder auf das Lesegerät und vom Lesegerät auf die Schließeinheit übertragen wird. Auf diese Weise ist es nicht erforderlich, dass das Lesegerät, welches beispielsweise als ein mobiles Kommunikationsgerät ausgebildet ist, selbst einen Schlüssel zur Authentifizierung gegenüber der Schließeinheit aufweist, sondern das Lesegerät, insbesondere RFID-Lesegerät, dient lediglich der Übertragung des Schlüssels aus dem separaten Transponder auf die Schließeinheit und stellt zudem durch die oben beschriebene Energieübertragung auf die Schließeinheit die elektrische Energieversorgung für die Schließeinheit zur Verfügung. In diesem Fall kommuniziert das Lesegerät sowohl mit der Schließeinheit als auch mit dem separaten Transponder. Auf diese Weise ist im Lesegerät selbst keine Verschlüsselungsfunktion erforderlich, diese bleibt auf den separaten Transponder beschränkt.

Dies ist beispielsweise von Vorteil, wenn die Schließeinheit von einer Vielzahl von Benutzern nur lediglich kurzzeitig zu nutzen ist. Beispielsweise ist die Schließeinheit in ein Schloss einer Tür eines Hotelzimmers integriert. Vom Hotel ist dann lediglich der zur Schließeinheit passende separate Transponder an den jeweiligen Benutzer, beispielsweise an den jeweiligen Hotelgast, auszugeben. Als Lesegerät, insbesondere RFID-Lesegerät, ist dann beispielsweise das private Mobiltelefon des jeweiligen Hotelgastes zu nutzen. Dieses ist durch die Nutzung des separaten Transponders nicht umzuprogrammieren.

Der separate Transponder ist zweckmäßigerweise als ein RFID-Transponder ausgebildet. Zur Übertragung des Schlüssels vom separaten Transponder auf das Lesegerät und von diesem auf die Schließeinheit werden beispielsweise der separate Transponder und die Schließeinheit zur gleichen Zeit in das RFID-Feld des Lesegerätes gebracht, durch entsprechendes Positionieren des Lesegerätes und des separaten Transponders nahe der Schließeinheit. Die Leseeinheit dient als Übertragungsvorrichtung der Schlüsseldaten vom separaten Transponder auf die Schließeinheit unter Nutzung einer Antikollisionsfunktion über die RFID-Schnittstelle. Alternativ kann der Schlüssel über Funk, d. h. über ein von RFID abweichendes kontaktloses Datenübertragungsverfahren, zum Beispiel Bluetooth, auf das Lesegerät übertragen werden und von diesem dann zweckmäßigerweise über die RFID-Schnittstelle auf die Schließeinheit übertragen werden.

Ausführungsbeispiele der Erfindung werden im Folgenden anhand von Zeichnungen näher erläutert.

Darin zeigen:
- Figur 1: schematisch eine Ausführungsform einer Schließvorrichtung,
- Figur 2: schematisch eine Ausführungsform einer Schließeinheit,
- Figur 3: schematisch eine detaillierte Darstellung einer Ausführungsform einer Schließeinheit,
- Figur 4: schematisch eine detaillierte Darstellung einer weiteren Ausführungsform einer Schließeinheit,
- Figur 5: schematisch eine detaillierte Darstellung einer weiteren Ausführungsform einer Schließeinheit, und
- Figur 6: schematisch eine weitere Ausführungsform einer Schließvorrichtung.

Einander entsprechende Teile sind in allen Figuren mit den gleichen Bezugszeichen versehen.

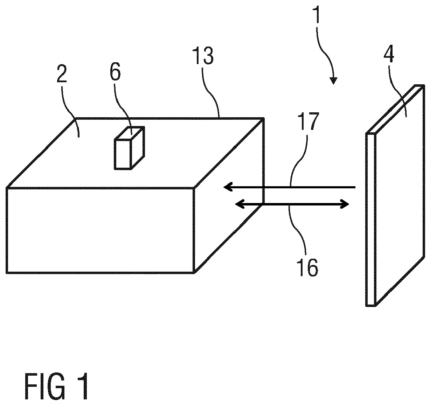

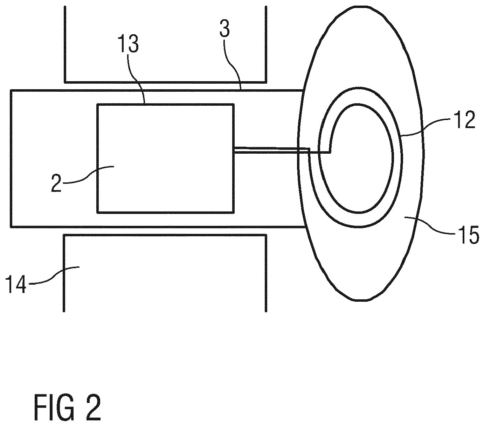

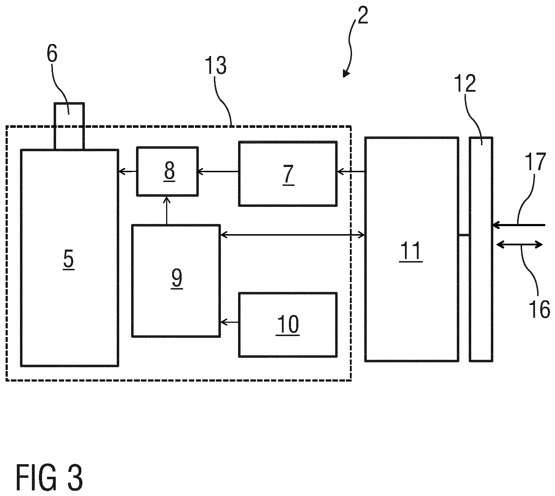

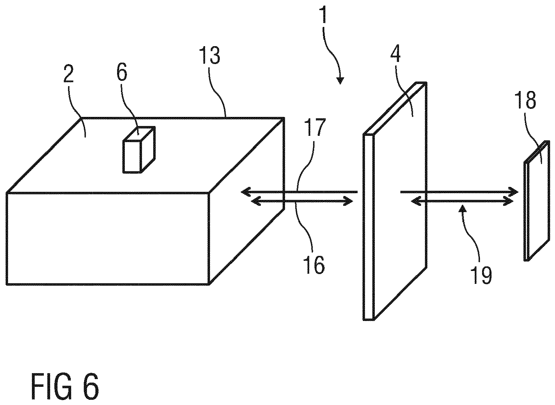

Figur 1 zeigt schematisch eine Ausführungsform einer Schließvorrichtung 1. Die Schließvorrichtung 1 umfasst eine Schließeinheit 2 für ein Schloss 3. Die Schließeinheit 2 wird auch als Passiv-Krypto-Aktuator oder als passiver integraler RFID-Krypto-Aktuator bezeichnet. Des Weiteren umfasst die Schließvorrichtung 1 ein Lesegerät 4. Das Lesegerät 4 ist als ein RFID-Lesegerät ausgebildet, auch als RFID-Reader bezeichnet. Die Schließvorrichtung 1 ist beispielsweise für ein in Figur 2 dargestelltes, als Türschloss ausgebildetes Schloss 3 geeignet, wobei die Schließeinheit 2 der Schließvorrichtung 1 ein Bestandteil des Türschlosses ist. Hierfür kann die Schließeinheit 2 beispielsweise in der Form eines Zylinderschlosses ausgebildet sein, so dass ein herkömmliches mechanisches Zylinderschloss durch die Schließeinheit 2 zu ersetzen ist. In den Figuren 3 bis 5 sind verschiedene Ausführungsformen der Schließeinheit 2 schematisch dargestellt. Figur 6 zeigt schematisch eine weitere Ausführungsform der Schließvorrichtung 1. Zur Betätigung der Schließeinheit 2 mit dem Lesegerät 4 ist der Aufbau einer kontaktlosen Kommunikationsschnittstelle zwischen dem Lesegerät 4 und der Schließeinheit 2 erforderlich, d. h. eine RFID-Funckommunikationsschnittstelle. Die Schließeinheit 2 ist als ein passiver RFID-Transponder ausgebildet oder umfasst einen passiven RFID-Transponder.

Die Schließeinheit 2 umfasst einen Aktor 5 zum Bewegen oder zum Blockieren und Freigeben einer hier nicht näher dargestellten Verriegelungs- und Entriegelungseinheit des Schlosses 3. Diese Verriegelungs- und Entriegelungseinheit des Schlosses 3 wird auch als Riegel des Schlosses 3 bezeichnet. Dazu ist der Aktor 5 im hier dargestellten Beispiel über eine mechanische Schließ- oder Sperrvorrichtung 6 entweder mit der Verriegelungs- und Entriegelungseinheit des Schlosses 3 derart gekoppelt, dass eine Bewegung des Aktors 5 über die mechanische Schließ- oder Sperrvorrichtung 6 auf die Verriegelungs- und Entriegelungseinheit des Schlosses 3 übertragbar ist, so dass die Verriegelungs- und Entriegelungseinheit des Schlosses 3 durch den Aktor 5 zu bewegen ist, d. h. das Schloss 3 durch den Aktor 5 aktiv zu schließen und zu öffnen ist, oder durch eine mittels des Aktors 5 bewirkte Bewegung der mechanischen Schließ- oder Sperrvorrichtung 6 ist die Verriegelungs- und Entriegelungseinheit des Schlosses 3, d. h. der Riegel des Schlosses 3, zu sperren und zu entsperren, d. h. zu blockieren und freizugeben, so dass beispielsweise eine manuelle Bewegung der Verriegelungs- und Entriegelungseinheit des Schlosses 3 blockiert oder freigegeben ist.

Des Weiteren umfasst die Schließeinheit 2 eine elektrische Energieversorgungsanordnung 7, einen elektrischen Schalter 8 zwischen der elektrischen Energieversorgungsanordnung 7 und dem Aktor 5, eine Verschlüsselungs-/Entschlüsselungseinheit 9, einen Schlüsselspeicher 10 sowie eine passive RFID-Grundschaltung 11 mit einer Antenne 12.

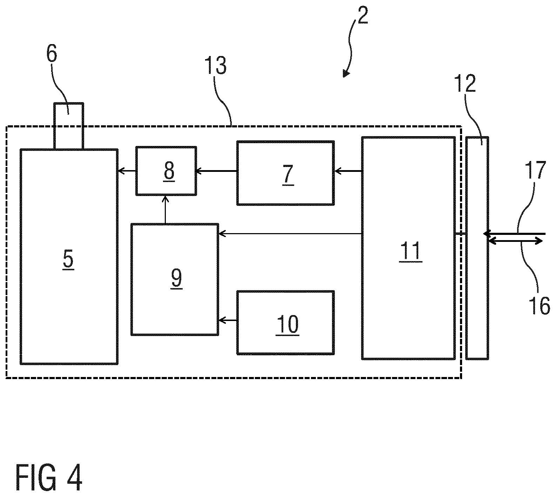

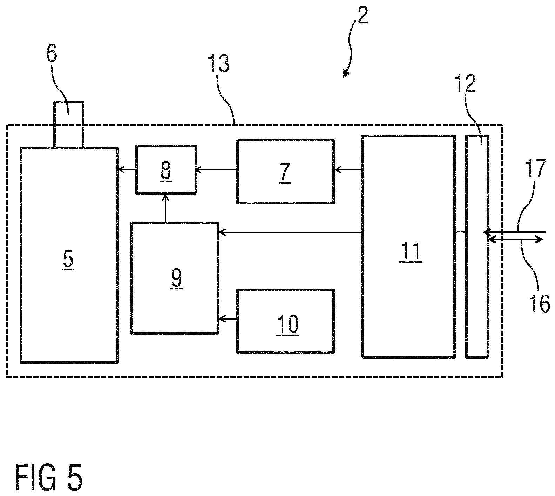

Zumindest der Aktor 5, der elektrische Schalter 8 zwischen der elektrischen Energieversorgungsanordnung 7 und dem Aktor 5, die Verschlüsselungs-/Entschlüsselungseinheit 9 und der Schlüsselspeicher 10 sind in einem nicht zerstörungsfrei zu öffnenden Gehäuse 13 angeordnet. In der in Figur 3 dargestellten Ausführungsform ist zudem auch die elektrische Energieversorgungsanordnung 7 im Gehäuse 13 angeordnet. In der in Figur 4 dargestellten Ausführungsform ist auch die passive RFID-Grundschaltung 11 im Gehäuse 13 angeordnet und in der in Figur 5 dargestellten Ausführungsform sind alle Komponenten der Schließeinheit 2 im Gehäuse 13 angeordnet, also auch die Antenne 12.

Wie bereits erwähnt, handelt es sich bei der RFID-Grundschaltung 11 um eine passive RFID-Grundschaltung 11. D. h. die Schließeinheit 2 umfasst einen passiven RFID-Transponder. Ein derartiger passiver RFID-Transponder weist keine eigene elektrische Energieversorgung auf, d. h. keine Batterie, sondern es ist mittels vom RFID-Lesegerät ausgesendeter elektromagnetischer Wellen elektrische Energie durch Induktion auf den RFID-Transponder zu übertragen. Es handelt sich dadurch bei der Schließeinheit 2 um einen passiven Krypto-Aktuator, auch als passiver integraler RFID-Krypto-Aktuator bezeichnet.

Diese passive Ausbildung der Schließeinheit 2 ist besonders vorteilhaft, da die Schließeinheit 2 auf diese Weise keine eigene elektrische Energiequelle, beispielsweise in Form einer Batterie, aufweist und auch nicht an eine Energiequelle, beispielsweise an ein lokales Energieversorgungsnetz, angeschlossen ist. Ein wesentlicher Vorteil dieser Ausführung der Schließeinheit 2 ohne interne Energiequelle und ohne eine kabelgebundene Kopplung an ein externes Energieversorgungsnetz ist die sehr hohe Zuverlässigkeit, welche vergleichbar zu der eines mechanischen Schlosses ist. Ein Ausfall aufgrund einer leeren Batterie kann nicht auftreten und erfordert deshalb hierfür auch keine Vorkehrungen, welche das Sicherheitsniveau reduzieren würden. Aufgrund der passiven Bauart ist die Schaltung fast nie unter Spannung und im Betrieb, es gibt also kaum Alterungsprozesse, welche zu Ausfällen führen könnten. Ein Ausfall der Schließeinheit 2 ist damit nicht wahrscheinlicher als ein Ausfall eines mechanischen Schlosses, zum Beispiel durch Abbrechen des Schlüssels.

Die passive RFID-Grundschaltung 11 wird auch als RFID-Front-End bezeichnet und umfasst nur die Bauteile des passiven RFID-Transponders, die zum Datenaustausch und zum Energieaustausch erforderlich sind. Die elektrische Energieversorgungsanordnung 7 der Schließeinheit 2 kann dabei lediglich aus der, aus der passiven RFID-Grundschaltung 11 herausgeführten und zum elektrischen Schalter 8 geführten, Energieversorgung bestehen, d. h. beispielsweise aus lediglich zumindest einer elektrischen Verbindung zwischen der passiven RFID-Grundschaltung 11 und dem elektrischen Schalter 8, so dass die gesamte Schließeinheit 2 über das Lesegerät 4 mit elektrischer Energie versorgt wird, welche nicht in der Schließeinheit 2 zwischengespeichert wird. Vorteilhafterweise kann die elektrische Energieversorgungsanordnung 7 jedoch beispielsweise einen elektrischen Energiekurzzeitzwischenspeicher, welcher besonders bevorzugt als ein Kondensator ausgebildet ist, zur kurzzeitigen Energiezwischenspeicherung aufweisen.

Dadurch kann die mittels vom RFID-Lesegerät ausgesendeter elektromagnetischer Wellen durch Induktion auf den RFID-Transponder, d. h. auf die passive RFID-Grundschaltung 11, übertragene elektrische Energie in dem als Kondensator ausgebildeten elektrischen Energiekurzzeitzwischenspeicher der elektrischen Energieversorgungsanordnung 7 der Schließeinheit 2 kapazitiv gespeichert werden, insbesondere kurzzeitig kapazitiv zwischengespeichert werden. Zu diesem Zweck umfasst die Energieversorgungsanordnung 7 der Schließeinheit 2, wie bereits erwähnt, vorteilhafterweise zumindest einen Kondensator. Alternativ oder zusätzlich kann die elektrische Energieversorgungsanordnung 7 der Schließeinheit 2 beispielsweise auch zumindest einen als Akkumulator ausgebildeten elektrischen Energiekurzzeitzwischenspeicher zur kurzzeitigen Energiezwischenspeicherung der mittels vom RFID-Lesegerät ausgesendeter elektromagnetischer Wellen durch Induktion auf den RFID-Transponder übertragenen elektrischen Energie umfassen.

Ein Laden des elektrischen Energiekurzzeitzwischenspeichers erfolgt zweckmäßigerweise ausschließlich durch das als RFID-Lesegerät ausgebildete Lesegerät 4 über die passive RFID-Grundschaltung 11 während eines jeweiligen Betätigens der Schließeinheit 2 mittels des RFID-Lesegerätes, also während eines jeweiligen Schließvorgangs. Ein derartiger Ladevorgang dauert vorzugsweise weniger als zwei Sekunden. Der elektrische Energiekurzzeitzwischenspeicher dient nur der Zwischenspeicherung für eine etwas größere Energiemenge als sie üblicherweise bei chipintegrierten Kondensatoren in RFID-Grundschaltungen 11 zur Verfügung stehen. Diese weisen üblicherweise eine Kapazität von 1 nF auf. Ein als Kondensator ausgebildeter elektrischer Energiekurzzeitzwischenspeicher weist zum Zweck der Zwischenspeicherung für eine etwas größere Energiemenge beispielsweise eine Kapazität von größer als 100 nF auf. Die passive Energieversorgung der Schließeinheit 2, deren elektrische Energieversorgungsanordnung 7 gegebenenfalls zumindest einen elektrischen Energiekurzzeitzwischenspeicher umfasst, ist somit neben der Montage der Schließeinheit 2 direkt im und/oder am jeweiligen Schloss 3 und insbesondere neben dem zerstörungsfrei nicht zu öffnenden Gehäuse 13 der Schließeinheit 2, in welchem insbesondere der Schlüsselspeicher 10, die Verschlüsselungs-/Entschlüsselungseinheit 9, der Aktor 5 und der Schalter 8 zur Betätigung des Aktors 5 manipulationssicher angeordnet sind, ein wesentliches Merkmal der Schließeinheit 2.

Um sicherzugehen, dass der elektrische Energiekurzzeitzwischenspeicher ausreichend geladen ist, so dass eine ausreichende Energiemenge zur Betätigung des Aktors 5 zur Verfügung steht, ist beispielsweise eine Ladezeit zum Aufladen des elektrischen Energiekurzzeitzwischenspeichers vorgegeben, so dass die Aktivierung des Schalters 8, um dadurch den Aktor 5 mit der im elektrischen Energiekurzzeitzwischenspeicher zwischengespeicherten elektrischen Energie zu betätigen, erst nach Ablauf dieser vorgegebenen Ladezeit erfolgt. Da jedoch die Energieübertragung vom Lesegerät 4 auf die passive RFID-Grundschaltung 11 der Schließeinheit 2 abhängig ist vom Abstand des Lesegerätes 4 von der Schließeinheit 2, muss eine entsprechend lange Ladezeit vorgegeben werden, um sicherzustellen, dass der elektrische Energiekurzzeitzwischenspeicher unter allen Bedingungen ausreichend geladen ist, bevor der Schalters 8 der Schließeinheit 2 automatisch aktiviert wird.

Um den Schalter 8 der Schließeinheit 2 so schnell wie möglich zu betätigen, so dass der Aktor 5 so schnell wie möglich die Verriegelungs- und Entriegelungseinheit des Schlosses 3 bewegt oder blockiert bzw. freigibt, weist die Schließeinheit 2 in einer besonders vorteilhaften Ausführungsform eine Ladestandsüberwachung des elektrischen Energiekurzzeitzwischenspeichers auf. Auf diese Weise wird der Schalter 8 und damit der Aktor 5 sofort automatisch aktiviert, wenn der elektrische Energiekurzzeitzwischenspeicher einen vorgegebenen Mindestladestand erreicht hat, welcher ausreicht, um mit der im elektrischen Energiekurzzeitzwischenspeicher gespeicherten Energie den Aktor 5 zu betätigen. Auf diese Weise ist eine Zeitspanne zwischen dem Verbindungsaufbau zwischen dem Lesegerät 4 und der Schließeinheit 2 und dem Bewegen oder Blockieren bzw. Freigeben der Verriegelungs- und Entriegelungseinheit des Schlosses 3 mittels des Aktors 5 unter allen Bedingungen auf ein Minimum verkürzt.

In einer vorteilhaften Ausführungsform ist der mittels der Ladestandsüberwachung ermittelte Ladestand des elektrischen Energiekurzzeitzwischenspeichers beispielsweise von der Schließeinheit 2 dem Lesegerät 4 zu übermitteln. Auf diese Weise erhält der Benutzer eine Information, dass das Laden des Energiespeichers funktioniert und der Aktor 5 das Schloss 3 bewegt oder blockiert bzw. freigibt. Des Weiteren könnte durch das Übermitteln des aktuellen Ladestandes des elektrischen Energiekurzzeitzwischenspeichers auf das Lesegerät 4 der Schalter 8 der Schließeinheit 2 zum Betätigen des Aktors 5 beispielsweise, alternativ zum automatischen Aktivieren bei Erreichen des vorgegebenen Ladestandes, durch den Benutzer über das Lesegerät 4 aktiviert werden.

Die Schließeinheit 2 funktioniert als ein passiver Transponder mit darin integriertem Aktor 5. Die Energieversorgung erfolgt ausschließlich von außen, über das RFID-Lesegerät, welches beispielsweise als ein mobiles Kommunikationsgerät ausgebildet ist, zum Beispiel als ein Mobiltelefon. Nur das RFID-Lesegerät dient als Energiequelle für die Schließeinheit 2. Die von dieser Energiequelle, d. h. vom RFID-Lesegerät, auf die Schließeinheit 2 übertragene Energie kann, wenn die elektrische Energieversorgungsanordnung 7 der Schließeinheit 2 einen elektrischen Energiekurzzeitzwischenspeicher aufweist, kurzzeitig zwischengespeichert werden, zur Nutzung für unmittelbar nachfolgende Vorgänge der Schließeinheit 2. Die Schließeinheit 2 ist in der übrigen Zeit energielos, mit den daraus resultierenden bereits oben geschilderten Vorteilen gegenüber batterieversorgten oder von einem lokalen Energieversorgungsnetz versorgten Schließsystemen.

Der Aktor 5, welcher auch als Aktuator bezeichnet wird, ist beispielsweise als ein Elektromotor, als ein Elektromagnet oder als ein Piezoelement, d. h. als ein Piezoaktor, ausgebildet. Mit derartigen Aktoren 5 ist eine kleine Bauweise und ein Energie sparender Betrieb möglich, so dass die vom RFID-Lesegerät übertragene elektrische Energie zu deren Betrieb ausreicht. Je nach Ausbildung der Schließeinheit 2 und je nachdem, ob die Verriegelungs- und Entriegelungseinheit des Schlosses 3 durch den Aktor 5 aktiv bewegt oder lediglich blockiert und freigegeben werden soll, ist die jeweils geeignete Ausführungsform des Aktors 5 einzusetzen.

Durch diese Schließeinheit 2, die Schließvorrichtung 1 und ein Verfahren zum Entriegeln und/oder Verriegeln des Schlosses 3 mittels der Schließvorrichtung 1 wird die Zuverlässigkeit für auf Transponder-Technik beruhende Schließsysteme wesentlich verbessert und gleichzeitig werden die Gesamtkosten für derartige Schließsysteme wesentlich reduziert, ohne das hierdurch die Sicherheit für die Steuerung der Zutrittskontrolle gegenüber bekannten Lösungen beeinträchtigt wird. Hierfür wird die auch als Passiv-Krypto-Aktuator bezeichnete Schließeinheit 2 verwendet, welche sich im Allgemeinen im Schloss 3 befindet bzw. bei einer Tür 14 auch in einer Wand neben der Tür 14 montiert sein kann. Im in Figur 2 dargestellten Beispiel ist die Schließeinheit 2 direkt in das Schloss 3 der Tür 14 integriert. Dieser Passiv-Krypto-Aktuator arbeitet passiv, benötigt also keine zusätzliche Energiequelle und damit keine Verkabelung wie bei aus dem Stand der Technik bekannten Online-Systemen. Die Energieversorgung erfolgt, wie in der Transponder-Technik bekannt, über das elektromagnetische Wechselfeld des Lesegerätes 4.

Die Schließeinheit 2 kann beispielsweise neben der hier dargestellten Anordnung an und/oder in einem Schloss 3 einer Tür 14 beispielsweise auch an und/oder in einem Kofferschloss, Tresorschloss, Fahrradschloss oder in einer Vielzahl weiterer Verschlusseinheiten angeordnet sein. Durch die ermöglichte sehr kleine Ausbildung und da keine eigene Energieversorgung beispielsweise durch eine Batterie oder einen Versorgungsnetzanschluss erforderlich ist, sind sehr viele Einsatzmöglichkeiten in verschiedensten Verschlusseinheiten gegeben.

Die mittels vom RFID-Lesegerät ausgesendeter elektromagnetischer Wellen durch Induktion auf die Schließeinheit 2, genauer gesagt auf deren passive RFID-Grundschaltung 11 übertragene elektrische Energie kann, wie bereits beschrieben, in einem vorzugsweise als Kondensator ausgebildeten elektrischen Energiekurzzeitzwischenspeicher der elektrischen Energieversorgungsanordnung 7 der Schließeinheit 2 kapazitiv gespeichert werden, insbesondere kurzzeitig kapazitiv zwischengespeichert werden. Zu diesem Zweck umfasst die elektrische Energieversorgungsanordnung 7 der Schließeinheit 2 vorteilhafterweise zumindest einen derartigen Kondensator, welcher, wie bereits beschrieben, zweckmäßigerweise eine Kapazität von größer als 100 nF aufweist. Alternativ oder zusätzlich kann die elektrische Energieversorgungsanordnung 7 der Schließeinheit 2 beispielsweise auch zumindest einen als Akkumulator ausgebildeten elektrischen Energiekurzzeitzwischenspeicher zur Energiespeicherung umfassen.

Als Schlüssel für dieses Schließsystem wird nun das Lesegerät 4 verwendet, d. h. ein Transponder-Lesegerät, auch als RFID-Lesegerät oder RFID-Reader bezeichnet. Das Lesegerät 4 ist vorteilhafterweise in einem mobilen elektronischen Gerät, insbesondere in einem mobilen Kommunikationsgerät, z.B. einem Mobiltelefon, Smartphone, PDA (d. h. in einem kleinen tragbaren Computer) o.ä., integriert. Im Allgemeinen ist ein Transponder-Lesegerät wesentlich teurer als ein Transponder, es werden jedoch auch mobile Geräte angeboten, welche serienmäßig bereits über ein integriertes Transponder-Lesegerät verfügen. Wesentlich befördert wird dieser allgemeine Trend noch durch die Verbreitung der Near Field Communication Technik (NFC), welche auf eine spezielle Anwendung der RFID-Transponder-Technik beruht und bei einer Trägerfrequenz von 13,56 MHz arbeitet. Mittels einer speziellen Software für die Schlüssel-Bedienung bzw. das Schlüssel-Management kann ein derartiges mobiles Kommunikationsgerät als Schlüssel für den Passiv-Krypto-Aktuator, d. h. für die Schließeinheit 2, verwendet werden, was zu einer wesentlichen Kostenreduzierung für das Gesamtsystem, d. h. die Schließvorrichtung 1, führt, da keine weiteren Kosten für das Lesegerät 4 entstehen.

Das aus dem Stand der Technik bekannte und bisher verwendete System, bei welchem der Transponder der Schlüssel und das Transponderlesegerät das Schloss ist, wird also grundsätzlich umgekehrt. Die elektronischen Schaltungsteile der Schließeinheit 2 sind in mehreren Halbleiterchips oder besonders vorteilhaft in einem Halbleiterchip integriert. Bei dem Halbleiterchip handelt es sich vorteilhafterweise um einen so genannten ASIC (application-specific integrated circuit), d. h. um eine anwendungsspezifische integrierte Schaltung, auch als Custom Chip bezeichnet. Dies ist eine kostengünstige Lösung und weist zudem eine hohe Sicherheit auf, da die Funktion des ASIC nicht manipulierbar ist.

Wesentlich ist, das sich die elektronische Schaltung der Schließeinheit 2 inklusive der kryptografischen Verschlüsselung, d. h. der Verschlüsselungs-/Entschlüsselungseinheit 9 und des Schlüsselspeichers 10, sowie inklusive der Schließ- oder Sperrvorrichtung 6 in einem stabilen, zerstörungsfrei nicht zu öffnenden Gehäuse 13 befinden und durch dieses eingekapselt sind, so dass ein unbefugtes Öffnen des Schlosses 3 nicht möglich ist. Die Schließ- oder Sperrvorrichtung 6 ist aus diesem Gehäuse 13 herausgeführt, um durch eine Bewegung der Schließ- oder Sperrvorrichtung 6 mittels des Aktors 5 die Verriegelungs- und Entriegelungseinheit des Schlosses 3 zu bewegen oder zumindest zu blockieren und freizugeben.

Beispielweise könnte das Gehäuse 13 aus Metall ausgebildet sein und mit einem Kunststoff, zum Beispiel Epoxidharz, ausgegossen sein. In einer besonders vorteilhaften, in den Figuren 2 und 4 dargestellten Ausführungsform befindet sich als einziges Bauteil die Antenne 12 für die kontaktlose Datenübertragung nicht in diesem robusten Gehäuse 13, da sie als reines Übertragungsmedium dient und nicht sicherheitsrelevant ist. Die Antenne 12 kann bei einem Türschloss vorteilhaft in einen Türknauf 15, welcher beispielsweise aus Kunststoff oder Holz ausgebildet ist, integriert sein, wie in Figur 2 dargestellt, da sie hier möglichst weit vom Metall des Gehäuses 13 sowie des Schlosses 3 entfernt ist, welches die kontaktlose Übertragung zwischen dem Lesegerät 4 und der Antenne 12 negativ beeinflussen würde.

Insbesondere bei Türen 14 ist es vorteilhaft, die Antenne 12 derart anzuordnen, dass sie an beiden Türseiten entlang verläuft, oder zwei Antennen 12 einzusetzen, jeweils eine Antenne 12 an jeder Türseite, beispielsweise in jedem Türknauf 15 eine Antenne 12. Auf diese Weise ist ein guter Kommunikationskontakt zwischen dem Lesegerät 4 und der Schließeinheit 2 sichergestellt. Bei einem Abbrechen des Türknaufs 15 würde zwar die Antenne 12 von der Schließeinheit 2 entfernt werden, dies würde aber zu keiner unberechtigten Türöffnung führen können.

Alternativ kann auch die Antenne 12 in das aus Metall ausgebildete Gehäuse 13 integriert sein, wie in Figur 5 dargestellt. Dies würde jedoch im Allgemeinen zu einer starken Reduzierung des Übertragungsabstandes führen.

In einem Verfahren zum Entriegeln und/oder Verriegeln des Schlosses 3 mittels einer derartigen Schließvorrichtung 1 muss das Lesegerät 4 in den Funktionsbereich der Antenne 12 der Schließeinheit 2 gebracht und aktiviert werden. Zum Beispiel wird das mobile Kommunikationsgerät in den Funktionsbereich der Antenne 12 der Schließeinheit 2 gebracht und das in dem mobilen Kommunikationsgerät integrierte Lesegerät 4 aktiviert, beispielsweise durch Betätigung einer Tasterfunktion oder durch ständiges so genanntes Polling, d. h. durch ständiges Suchen eines RFID-Transponders. Anschließend wird eine bidirektionale Kommunikationsverbindung 16 zwischen dem Lesegerät 4 und der Schließeinheit 2 aufgebaut. Diese Kommunikation beginnt im Allgemeinen mit einer Authentifizierung des Lesegerätes 4, d. h. das Lesegerät 4 muss nachweisen, dass ein Zugriff auf den Datenspeicher und/oder den Schalter 8 der Schließeinheit 2 zugelassen wird. Hierfür werden die üblicherweise in der Transpondertechnik eingesetzten Verfahren angewendet, zum Beispiel Password oder Challenge-Response-Verfahren. Dafür wird ein vom Lesegerät 4 erzeugter Schlüssel auf die Schließeinheit 2 übertragen und in der Verschlüsselungs-/Entschlüsselungseinheit 9 mit einem Schlüssel aus dem Schlüsselspeicher 10 verglichen.

Optional kann auch eine Authentifizierung der Schließeinheit 2 zum Lesegerät 4, also eine gegenseitige Authentifizierung beider Partner, implementiert sein. Nach erfolgreicher Authentifizierung kann nachfolgend durch eine weitere Kommunikation 17, welche zur Erhöhung der Sicherheit möglichst auch noch einmal kryptografisch verschlüsselt ist, der Schalter 8 aktiviert werden, d. h. geschlossen werden. Erst dadurch wird die elektrische Energie der Energieversorgungsanordnung 7 über den geschlossenen Schalter 8 zum Aktor 5 geleitet, so dass der Aktor 5 die Schließ- oder Sperrvorrichtung 6 der Schließeinheit 2 betätigt und dadurch den Riegel des Schlosses 3, d. h. die Verriegelungs- und Entriegelungseinheit des Schlosses 3 betätigt, also aktiv bewegt, oder lediglich freigibt. Wird die Verriegelungs- und Entriegelungseinheit des Schlosses 3 durch die Schließ- oder Sperrvorrichtung 6 der Schließeinheit 2 lediglich entsperrt, d. h. freigegeben, so kann die Tür 14 nun beispielsweise durch Betätigen, zum Beispiel Drehen, des Türknaufs 15 geöffnet werden.

In einem weiteren, in Figur 6 dargestellten Ausführungsbeispiel befindet sich ein Schlüssel zur Authentifizierung des Lesegeräts 4 gegenüber der Schließeinheit 2 nicht im Lesegerät 4 selbst, sondern in einem separaten Transponder 18 und wird durch das Lesegerät 4, beispielsweise durch das als Mobiltelefon oder PDA ausgebildete mobile Kommunikationsgerät, lediglich übertragen. In diesem Fall kommuniziert das Lesegerät 4 sowohl mit der Schließeinheit 2 als auch über eine weitere Kommunikationsverbindung 19 mit dem separaten Transponder 18. Auf diese Weise ist im Lesegerät 4 selbst keine Verschlüsselungsfunktion erforderlich, diese bleibt auf den separaten Transponder 18 beschränkt. Das Lesegerät 4 dient in dieser Ausführungsform der Schließvorrichtung 1 lediglich als Übertragungsvorrichtung der Schlüsseldaten unter Nutzung einer Antikollisionsfunktion über die RFID-Schnittstelle.

In diesem in Figur 6 dargestellten Ausführungsbeispiel ist es somit nicht erforderlich, den zur Schließeinheit 2 passenden Schlüssel im Lesegerät 4 zu speichern, sondern dieser Schlüssel und eventuell auch eine entsprechende Verschlüsselungseinheit sind im separaten Transponder 18 gespeichert, so dass der Schlüssel lediglich durch das Lesegerät 4 zur Schließeinheit 2 übertragen wird. Diese Ausführungsform eignet sich beispielsweise für Schließeinheiten 2, welche von einer Mehrzahl von Benutzern jeweils nur über einen kurzen Zeitraum hinweg benutzt werden, beispielweise für Schließeinheiten 2, welche in und/oder an Schlössern 3 von Hotelzimmertüren angeordnet sind. Es ist dann nicht erforderlich, den zur jeweiligen Schließeinheit 2 passenden Schlüssel auf ein beispielsweise als Mobiltelefon ausgebildetes privates Lesegerät 4 eines jeweiligen Benutzers zu übertragen und nach Ablauf einer jeweiligen Benutzungszeit auch wieder zu löschen. Bei dieser Ausführungsform der Schließvorrichtung 1 genügt stattdessen die Ausgabe des zur jeweiligen Schließeinheit 2 passenden separaten Transponders 18 an den jeweiligen Benutzer, welcher dann beispielsweise sein Mobiltelefon als Lesegerät 4 zur Übertragung des Schlüssels vom separaten Transponder 18 zur Schließeinheit 2 und zum dadurch ermöglichten Öffnen und Schließen des Schlosses 3 nutzen kann.

Zur Übertragung des Schlüssels vom separaten Transponder 18 auf die Schließeinheit 2 müssen sich beispielsweise die Schließeinheit 2, genauer gesagt deren Antenne 12, und der separate Transponder 18 zur gleichen Zeit im RFID-Feld des Lesegerätes 4 befinden, so dass zur gleichen Zeit die bidirektionale Kommunikationsverbindung 16 zwischen dem Lesegerät 4 und der Schließeinheit 2 sowie die weitere Kommunikationsverbindung 19 zwischen dem Lesegerät 4 und dem separaten Transponder 18 aufgebaut werden kann und der Schlüssel über diese Kommunikationsverbindungen 16, 19 vom separaten Transponder 18 über das Lesegerät 4 zur Schließeinheit 2 übertragen werden kann. Nach erfolgreicher Authentifizierung wird durch die weitere Kommunikation 17, welche zur Erhöhung der Sicherheit auch noch einmal kryptografisch verschlüsselt sein kann, der Schalter 8 aktiviert, d. h. geschlossen. Erst dadurch wird die elektrische Energie der Energieversorgungsanordnung 7 über den geschlossenen Schalter 8 zum Aktor 5 geleitet, so dass der Aktor 5 die Schließ- oder Sperrvorrichtung 6 der Schließeinheit 2 betätigt und dadurch den Riegel des Schlosses 3, d. h. die Verriegelungs- und Entriegelungseinheit des Schlosses 3 betätigt, also aktiv bewegt, oder lediglich freigibt, um sie anschließend manuell betätigen zu können.

In einer weiteren Möglichkeit dieser Ausführungsform der Schließvorrichtung 1 wird der Schlüssel über Funk, d. h. über ein von RFID abweichendes kontaktloses Datenübertragungsverfahren, beispielsweise Bluetooth, auf das Lesegerät 4 übertragen und von diesem dann zweckmäßigerweise über die RFID-Schnittstelle auf die Schließeinheit 2 übertragen.

Ein wesentlicher Vorteil der Ausführung der Schließeinheit 2 ohne eigene interne Energieversorgung durch eine Batterie oder eine Kopplung an ein lokales Versorgungsnetz ist die sehr hohe Zuverlässigkeit, welche vergleichbar zu der eines mechanischen Schlosses ist. Ein Ausfall aufgrund einer leeren Batterie kann nicht auftreten und erfordert deshalb hierfür auch keine Vorkehrungen, welche das Sicherheitsniveau reduzieren würden. Aufgrund der passiven Bauart ist die Schaltung der Schließeinheit 2 fast nie unter Spannung und im Betrieb, es gibt also kaum Alterungsprozesse, welche zu Ausfällen führen könnten. Ein Ausfall der Schließeinheit 2 ist damit nicht wahrscheinlicher als ein Ausfall eines mechanischen Schlosses, zum Beispiel durch Abbrechen des Schlüssels.

Die Funktionssicherheit und der Bedienkomfort des Schlosses 3 bzw. der Schließeinheit 2 können weiter verbessert werden, wenn die Schließeinheit 2 einen Sensor zur Überwachung der Bewegung oder der Blockade und Freigabe der Verriegelungs- und Entriegelungseinheit des Schlosses 3 aufweist. Beispielsweise überwacht der Sensor den Aktor 5 und/oder die Bewegung der Schließ- oder Sperrvorrichtung 6 der Schließeinheit 2 und/oder direkt die Bewegung der Verriegelungs- und Entriegelungseinheit des Schlosses 3. Ein jeweiliges Sensorergebnis ist über die kontaktlose Kommunikationsschnittstelle zum Lesegerät 4 zu übertragen und auf diesem bzw. auf dem mobilen Kommunikationsgerät, in welchem das Lesegerät 4 installiert ist, einem jeweiligen Benutzer anzuzeigen. Auf diese Weise ist sofort erfassbar, ob der Aktor 5 wirklich betätigt wurde und dadurch die Verriegelungs- und Entriegelungseinheit des Schlosses 3 freigegeben ist. Als Sensor ist beispielsweise ein Reedsensor zu verwenden, d. h. ein Reedkontakt, welcher nur bei korrekter Bewegung des Aktors 5 und/oder der Schließ- oder Sperrvorrichtung 6 und/oder der Verriegelungs- und Entriegelungseinheit des Schlosses 3 aktiviert wird und ein entsprechendes Sensorsignal über die Schaltung der Schließeinheit 2 an das Lesegerät 4 weitergibt.

Alternativ oder zusätzlich kann die Schließeinheit 2 eine optische, akustische und/oder haptische Ausgabeeinheit zur Ausgabe des Sensorergebnisses des Sensors aufweisen, so dass das Sensorergebnis, d. h. das Signal des Sensors, über die optische, akustische und/oder haptische Ausgabeeinheit der Schließeinheit 2 an den Benutzer ausgegeben werden kann. Eine derartige optische Ausgabeeinheit weist beispielsweise eine Licht emittierende Diode (LED) oder eine Mehrzahl Licht emittierender Dioden auf. Zweckmäßigerweise wird auch die optische, akustische und/oder haptische Ausgabeeinheit und, falls erforderlich, auch der Sensor über das Lesegerät 4 mit elektrischer Energie versorgt, analog der anderen Komponenten der Schließeinheit 2, so dass auch hierfür keine separate Energiequelle erforderlich ist.

### BEZUGSZEICHENLISTE

- 1: Schließvorrichtung
- 2: Schließeinheit
- 3: Schloss
- 4: Lesegerät
- 5: Aktor
- 6: Schließ- oder Sperrvorrichtung
- 7: elektrische Energieversorgungsanordnung
- 8: Schalter
- 9: Verschlüsselungs-/Entschlüsselungseinheit
- 10: Schlüsselspeicher
- 11: passive RFID-Grundschaltung
- 12: Antenne
- 13: Gehäuse
- 14: Tür
- 15: Türknauf
- 16: bidirektionale Kommunikationsverbindung
- 17: weitere Kommunikation
- 18: separater Transponder
- 19: weitere Kommunikationsverbindung

## Patentansprüche

1. Schließeinheit (2) für ein Schloss (3), umfassend einen Aktor (5) zum Bewegen oder zum Blockieren und Freigeben einer Verriegelungs- und Entriegelungseinheit des Schlosses (3), eine elektrische Energieversorgungsanordnung (7), einen Schalter (8) zwischen der elektrischen Energieversorgungsanordnung (7) und dem Aktor (5), eine Verschlüsselungs-/Entschlüsselungseinheit (9), einen Schlüsselspeicher (10) sowie eine passive RFID-Grundschaltung (11) mit einer Antenne (12), wobei die Schließeinheit (2) ausschließlich über ein RFID-Lesegerät (4) mit elektrischer Energie versorgbar ist, wobei die Energieübertragung vom RFID-Lesegerät (4) auf die Schließeinheit (2) über Induktion erfolgt, wobei die elektrische Energieversorgungsanordnung (7) zur Speicherung der vom RFID-Lesegerät (4) auf die Schließeinheit (2) übertragenen elektrischen Energie zumindest einen elektrischen Energiekurzzeitzwischenspeicher umfasst, welcher als ein Kondensator ausgebildet ist, und wobei die Schließeinheit (2) über eine bidirektionale Kommunikationsverbindung zwischen dem RFID-Lesegerät (4) und der Schließeinheit (2) einen Schlüssel vom RFID-Lesegerät (4) empfängt, mittels welchem sich das RFID-Lesegerät (4) gegenüber der Schließeinheit (2) authentifiziert, **dadurch gekennzeichnet, dass** zumindest der Aktor (5), der Schalter (8) zwischen der elektrischen Energieversorgungsanordnung (7) und dem Aktor (5), die Verschlüsselungs-/Entschlüsselungseinheit (9) und der Schlüsselspeicher (10) in einem nicht zerstörungsfrei zu öffnenden Gehäuse (13) angeordnet sind, welches nur durch dessen Zerstörung zu öffnen ist.

2. Schließeinheit (2) nach Anspruch 1,
**dadurch gekennzeichnet, dass** der zumindest eine elektrische Energiekurzzeitzwischenspeicher außerhalb der passiven RFID-Grundschaltung (11) angeordnet ist und mit der passiven RFID-Grundschaltung (11) und dem Schalter (8) elektrisch verbunden ist.

3. Schließeinheit (2) nach einem der vorhergehenden Ansprüche,
umfassend eine Ladestandsüberwachung des zumindest einen elektrischen Energiekurzzeitzwischenspeichers.

4. Schließeinheit (2) nach einem der vorhergehenden Ansprüche,
**dadurch gekennzeichnet, dass** der Aktor (5) als ein Elektromotor, als ein Elektromagnet oder als ein Piezoelement ausgebildet ist.

5. Schließeinheit (2) nach einem der vorhergehenden Ansprüche,
umfassend einen Sensor zur Überwachung der Bewegung oder der Blockade und Freigabe der Verriegelungs- und Entriegelungseinheit des Schlosses (3).

6. Schließeinheit (2) nach Anspruch 5,
umfassend eine optische, akustische und/oder haptische Ausgabeeinheit zur Ausgabe eines Sensorergebnisses des Sensors.

7. Schließeinheit (2) nach einem der vorhergehenden Ansprüche,
**dadurch gekennzeichnet, dass** das Gehäuse (13) aus Metall und/oder aus Kunststoff ausgebildet ist.

8. Schließeinheit (2) nach einem der vorhergehenden Ansprüche,
**dadurch gekennzeichnet, dass** alle im Gehäuse (13) angeordneten Komponenten in Kunststoff eingegossen und dadurch stoffschlüssig miteinander verbunden sind.

9. Schließvorrichtung (1), umfassend zumindest eine Schließeinheit (2) nach einem der vorhergehenden Ansprüche und zumindest ein RFID-Lesegerät (4).

10. Schließvorrichtung (1) nach Anspruch 9,
**dadurch gekennzeichnet, dass** das RFID-Lesegerät (4) als ein mobiles Kommunikationsgerät ausgebildet ist oder in ein mobiles Kommunikationsgerät integriert ist.

11. Schließvorrichtung (1) nach Anspruch 9 oder 10,
umfassend einen separaten Transponder (18) mit einem Schlüssel zur Authentifizierung des RFID-Lesegeräts (4) gegenüber der Schließeinheit (2).

12. Verfahren zum Entriegeln und/oder Verriegeln eines Schlosses (3) mittels einer Schließvorrichtung (1) nach einem der Ansprüche 9 bis 11, wobei eine bidirektionale Kommunikationsverbindung (16) zwischen dem RFID-Lesegerät (4) und der Schließeinheit (2) aufgebaut wird, wobei elektrische Energie vom RFID-Lesegerät (4) auf die Schließeinheit (2) über Induktion übertragen und im als Kondensator ausgebildeten elektrischen Energiekurzzeitzwischenspeicher gespeichert wird, wobei sich das RFID-Lesegerät (4) gegenüber der Schließeinheit (2) authentifiziert und wobei nach erfolgreicher Authentifizierung der Schalter (8) der Schließeinheit (2) betätigt wird, um mittels des Aktors (5), welcher mit der vom RFID-Lesegerät (4) auf die Schließeinheit (2) übertragenen und im als Kondensator ausgebildeten elektrischen Energiekurzzeitzwischenspeicher gespeicherten elektrischen Energie betrieben wird, die Verriegelungs- und Entriegelungseinheit des Schlosses (3) zu bewegen oder zu blockieren bzw. freizugeben.

13. Verfahren nach Anspruch 12,
**dadurch gekennzeichnet, dass** sich das RFID-Lesegerät (4) gegenüber der Schließeinheit (2) mittels eines Schlüssels authentifiziert, welcher von einem separaten Transponder (18) auf das RFID-Lesegerät (4) und vom RFID-Lesegerät (4) auf die Schließeinheit (2) übertragen wird.

## Claims

1. Closure unit (2) for a lock (3), comprising an actuator (5) for moving or for blocking and releasing a locking and unlocking unit of the lock (3), an electrical power supply arrangement (7), a switch (8) between the electrical power supply arrangement (7) and the actuator (5), an encryption/decryption unit (9), a key memory (10) and a basic passive RFID circuit (11) having an antenna (12), wherein the closure unit (2) is suppliable with electrical energy exclusively via an RFID reader (4), wherein the energy transfer from the RFID reader (4) to the closure unit (2) is effected by means of induction, wherein the electrical power supply arrangement (7) comprises at least one electrical short-term energy buffer, which is in the form of a capacitor, for storing the electrical energy transferred from the RFID reader (4) to the closure unit (2), and wherein the closure unit (2) uses a bidirectional communication connection between the RFID reader (4) and the closure unit (2) to receive a key from the RFID reader (4), which the RFID reader (4) uses to authenticate itself to the closure unit (2), **characterized in that** at least the actuator (5), the switch (8) between the electrical power supply arrangement (7) and the actuator (5), the encryption/decryption unit (9) and the key memory (10) are arranged in a housing (13) that cannot be opened non-destructively, which can be opened only by destroying it.

2. Closure unit (2) according to claim 1,
**characterized in that** the at least one electrical short-term energy buffer is arranged outside the basic passive RFID circuit (11) and is electrically connected to the basic passive RFID circuit (11) and the switch (8).

3. Closure unit (2) according to either of the preceding claims,
comprising state of charge monitoring for the at least one electrical short-term energy buffer.

4. Closure unit (2) according to one of the preceding claims,
**characterized in that** the actuator (5) is in the form of an electric motor, in the form of an electromagnet or in the form of a piezo element.

5. Closure unit (2) according to one of the preceding claims,
comprising a sensor for monitoring the movement or the blockage and release of the locking and unlocking unit of the lock (3).

6. Closure unit (2) according to claim 5,
comprising a visual, audible and/or haptic output unit for outputting a sensor result of the sensor.

7. Closure unit (2) according to one of the preceding claims,
**characterized in that** the housing (13) is produced from metal and/or from plastic.

8. Closure unit (2) according to one of the preceding claims,
**characterized in that** all the components arranged in the housing (13) are cast in plastic and, as a result, connected to one another by a material bond.

9. Closure apparatus (1), comprising at least one closure unit (2) according to one of the preceding claims and at least one RFID reader (4).

10. Closure apparatus (1) according to claim 9,
**characterized in that** the RFID reader (4) is in the form of a mobile communication device or is integrated in a mobile communication device.

11. Closure apparatus (1) according to claim 9 or 10,
comprising a separate transponder (18) having a key for authenticating the RFID reader (4) to the closure unit (2).

12. Method for unlocking and/or locking a lock (3) by means of a closure apparatus (1) according to one of Claims 9 to 11, wherein a bidirectional communication connection (16) is set up between the RFID reader (4) and the closure unit (2), wherein electrical energy is transferred from the RFID reader (4) to the closure unit (2) by means of induction and stored in the electrical short-term energy buffer in the form of a capacitor, wherein the RFID reader (4) authenticates itself to the closure unit (2) and wherein, following successful authentication, the switch (8) of the closure unit (2) is operated in order to use the actuator (5), which is operated with the electrical energy transferred from the RFID reader (4) to the closure unit (2) and stored in the electrical short-term energy buffer in the form of a capacitor, to move or to block or to release the locking and unlocking unit of the lock (3).

13. Method according to claim 12,
**characterized in that** the RFID reader (4) authenticates itself to the closure unit (2) by means of a key that is transferred from a separate transponder (18) to the RFID reader (4) and from the RFID reader (4) to the closure unit (2).

## Revendications

1. Unité de fermeture (2) pour une serrure (3), comprenant un actionneur (5) pour déplacer ou bloquer et libérer une unité de verrouillage et déverrouillage de la serrure (3), un système d'alimentation d'énergie électrique (7), un contacteur (8) entre le système d'alimentation d'énergie électrique (7) et l'actionneur (5), une unité de codage/décodage (9), une mémoire de code (10) ainsi qu'un circuit de base passif d'identification par radiofréquence (IRF) (11) avec une antenne (12), l'unité de fermeture (2) pouvant être alimentée exclusivement par un lecteur IRF (4) avec de l'énergie électrique, la transmission d'énergie ayant lieu par induction depuis le lecteur IRF (4) à l'unité de fermeture (2), le système d'alimentation d'énergie électrique (7) comprenant au moins un accumulateur temporaire de courte durée d'énergie électrique pour accumuler l'énergie électrique transmise par le lecteur IRF (4) à l'unité de fermeture (2), lequel est constitué comme un condensateur et l'unité de fermeture (2) recevant un code du lecteur IRF (4) par une liaison de communication bidirectionnelle entre le lecteur IRF (4) et l'unité de fermeture (2) au moyen duquel le lecteur IRF (4) s'authentifiant auprès de l'unité de fermeture (2), **caractérisée en ce qu'**au moins l'actionneur (5), le contacteur (8) entre le système d'alimentation d'énergie électrique (7) et l'actionneur (5), l'unité de codage/décodage (9) et la mémoire de code (10) sont disposés dans un boîtier (13) à ouvrir sans être exempt de destruction, lequel ne peut être ouvert que par la destruction de celui-ci.

2. Unité de fermeture (2) selon la revendication 1, **caractérisée en ce que** l'au moins un accumulateur temporaire de courte durée d'énergie électrique est disposé en dehors du circuit de base passif IRF (11) et est relié électriquement au circuit de base passif IRF (11) et au contacteur (8).

3. Unité de fermeture (2) selon l'une quelconque des revendications précédentes, comprenant un contrôle de l'état de charge de l'au moins un accumulateur temporaire de courte durée d'énergie électrique.

4. Unité de fermeture (2) selon l'une quelconque des revendications précédentes, **caractérisée en ce que** l'actionneur (5) est constitué sous la forme d'un moteur électrique, d'un électro-aimant ou d'un élément piézoélectrique.

5. Unité de fermeture (2) selon l'une quelconque des revendications précédentes, comprenant un capteur pour la surveillance du déplacement ou du blocage et de la libération de l'unité de verrouillage et déverrouillage de la serrure (3).

6. Unité de fermeture (2) selon la revendication 5, comprenant une unité d'émission optique, acoustique et/ou haptique pour émettre un résultat de détection du capteur.

7. Unité de fermeture (2) selon l'une quelconque des revendications précédentes, **caractérisée en ce que** le boîtier (13) est constitué en métal et/ou en matière plastique.

8. Unité de fermeture (2) selon l'une quelconque des revendications précédentes, **caractérisée en ce que** tous les composants disposés dans le boîtier (13) sont moulés en matière plastique et sont de ce fait reliés entre eux par conformité de matière.

9. Dispositif de fermeture (1), comprenant au moins une unité de fermeture (2) selon l'une quelconque des revendications précédentes et au moins un lecteur IRF (4).

10. Dispositif de fermeture (1) selon la revendication 9, **caractérisé en ce que** le lecteur IRF (4) est constitué sous la forme d'un appareil de communication mobile ou est intégré dans un appareil de communication mobile.

11. Dispositif de fermeture (1) selon la revendication 9 ou 10, comprenant un transpondeur séparé (18) avec un code pour authentifier le lecteur IRF (4) auprès de l'unité de fermeture (2).

12. Procédé pour déverrouiller et/ou verrouiller une serrure (3) au moyen d'un dispositif de fermeture (1) selon l'une quelconque des revendications 9 à 11, une liaison de communication bidirectionnelle (16) étant établie entre le lecteur IRF (4) et l'unité de fermeture (2), de l'énergie électrique étant transmise par induction depuis le lecteur IRF (4) à l'unité de fermeture (2) et étant accumulée dans l'accumulateur temporaire de courte durée d'énergie électrique constitué comme un condensateur, le lecteur IRF (4) s'authentifiant auprès de l'unité de fermeture (2) et après authentification réussie, le contacteur (8) de l'unité de fermeture (2) étant actionné pour déplacer ou bloquer ou bien libérer l'unité de verrouillage et déverrouillage de la serrure (3) au moyen de l'actionneur (5), lequel est actionné par l'énergie électrique transmise depuis le lecteur IRF (4) à l'unité de fermeture (2) et accumulée dans l'accumulateur temporaire de courte durée d'énergie électrique constitué comme un condensateur.

13. Procédé selon la revendication 12, **caractérisé en ce que** le lecteur IRF (4) s'authentifie auprès de l'unité de fermeture (2) au moyen d'un code, lequel est transmis par un transpondeur séparé (18) au lecteur IRF (4) et par le lecteur IRF (4) à l'unité de fermeture (2).
